# EUROPEAN PATENT APPLICATION

(11) **EP 0 571 039 A1**
(43) Date of publication of application: **24.11.1993**
(21) Application number: 93201406.1
(22) Date of filing: 18.05.1993
(51) Int. Cl.: F16H 7/24, F01L 1/46

(54) **Preassembled camshaft drive for internal combustion engines**

(30) Priority: 22.05.1992 IT MI920516 U
(71) Applicant: SOCIETA' ITALIANA CATENE CALIBRATE REGINA S.p.A., I-20123 Milan (IT)
(72) Inventor: Ancarani Restelli, Amedeo, I-22052 Cernusco Lombardone (Como) (IT)
(74) Representative: Faraggiana, Vittorio, Dr. Ing.

(57) **Abstract**

A transmission gear unit (10) for the timing system control in internal combustion engines comprises two gears (11, 12) interconnected with each other by at least one gearing chain (13). A removable insert (14) is interposed between the gears (11, 12), which insert (14) has on one side thereof, one element (19) for fitting between at least two teeth of the first gear (11) and on its opposite side, at least two elements (16, 17) each fitting between two teeth of the second gear (12). In this way the insert (14) keeps the chain (13) stretched over the gears and prevents the gears from mutually rotating. The insert (14) is provided with a grip handle (18) for removing it by a movement normal to the plane of the gears thereby releasing the rotation of said gears after they have been set in place.

## Description

The present invention relates to a chain and gear drive unit, in particular for the timing system control in internal combustion engines.

In mounting a gearing chain between two gears normally a worker entrusted with this job takes the two gears separately and mounts them, subsequently putting the gearing chain thereon. Often it must be ensured that the gears be rotated to a predetermined mutual position before mounting the chain so as to ensure the gear timing, this expedient being absolutely necessary in the timing system control of engines.

However being obliged to position the three members separately taking care at the same time of the gear timing, gives rise to an unavoidable slowing down in works and may bring about mounting errors.

In the known art, especially in the case of timing system controls, attemps have been made to get round these problems by providing preassembled units consisting of the two gears and the chain coupled with one another and at least partly held in a support case so as to form a self-contained pre-timed unit to be fitted as a unitary piece onto the drive and driven shafts. Such a solution is however expensive as a support case is required, and it cannot be employed in assembling all types of engines, in that the bulkiness of the preassembled unit is greater than that of the gearing chain and gears alone.

The general object of the present invention is to eliminate the above mentioned drawbacks by providing a preassembled and pre-timed transmission gear unit for the timing system control in internal combustion engines, enabling mounting to be speeded up and preventing timing errors, while at the same time having a reduced cost and the same bulkiness as an ordinary single-element gear unit, once it has been mounted.

In view of the above object a transmission gear unit for the timing system control in internal combustion engines has been envisaged in accordance with the present invention, which comprises a first gear and a second gear disposed in one and the same plane and interconnected with each other by at least one gearing chain, a removable insert being interposed between the gears, which insert has on one side thereof, one fitting element disposed between at least two teeth of the first gear and, on its opposite side, at least two elements each fitting between two teeth of the second gear, the insert keeping the chain stretched over the gears and preventing the gears from mutually rotating.

For better explaining the innovatory principles of the present invention and the advantages it offers compared with the known art, a possible embodiment putting into practice said principles will be given hereinafter by way of non-limiting example with the aid of the accompanying drawings, in which:
- Fig. 1 is a diagrammatic perspective view of the transmission gear unit in accordance with the invention;
- Fig. 2 is a part front view to an enlarged scale of a detail of the unit shown in Fig. 1.

Referring to the drawings, a transmission gear unit generally denoted by 10 is shown, which comprises a pair of toothed wheels 11, 12 interconnected by a gearing chain 13. The toothed wheels and chain may be for example of the dual type.

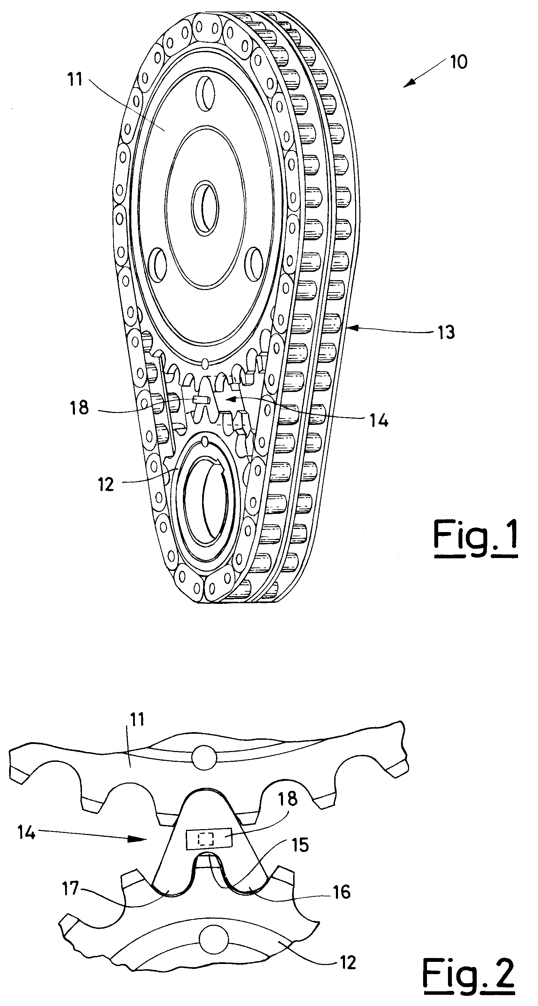

After disposing the gears such that their meshing elements are in timed relationship, in the same manner as they are to be afterwards mounted to a driven and drive shafts (the drive shaft and camshaft in an internal combustion engine, for example), an insert or spacer 14 is fitted between the facing teeth of the two gears, which insert is for example plastic moulded and such shaped as to be able to keep the chain stretched. As clearly shown in Fig. 2, the insert has a V-shaped section in a plane parallel to the gear plane. The "V" point 19 forms a fitting element between two gear teeth 11 whereas the free ends of the two "V" limbs each form a fitting element between two teeth of the second gear 12. The space between the "V" limbs forms a seat 15 receiving at least one tooth of the second gear. Such a tooth can be for example in common between the pairs of teeth receiving the "V" free ends 16, 17. Advantageously the V-shaped insert may have a rounded point 19 and rounded limb ends 16, 17, so as to suitably match the shape of the space between the teeth.

As a result of fitting the insert 14 between the gears, all rotatory motions of the gear-chain assembly is prevented because the chain constrains the gears to move in a concordant direction, whereas the insert 14 makes the gears match such that only their rotation in opposite ways is allowed (essentially, the insert "extends" one tooth of the gear 12 for meshing with gear 11).

By virtue of the transverse width of the gears and transverse stiffness of the chain the drive unit is rigid also in the plane containing it.

Thus, a quite rigid unit is achieved in which the positions of the component parts thereof are fixed, thereby providing a preassembled and pre-timed drive unit.

Advantageously, on one of its ends the insert 14 is provided with a small handle 18 which for example is T- or U-shaped, for the purpose of enabling the operator to grip it easily after he has definitively installed the preassembled unit in place, so that he may remove the insert from the gears in a direction normal thereto and hence release the gears themselves.

It will be obviously recognized that the unit as above described has substantially the same cost as a unit of the known art provided in the form of separated members. In addition, once it has been installed, it has the same bulkiness as the known units that are not pre-timed and, as a result, it can be mounted very quickly to any engine for example, without particular problems arising.

Obviously the above description of one embodiment of the invention putting into practice the innovatory principles thereof is given by way of example only and therefore must not be considered as a limitation to the scope of the invention as hereinafter claimed.

For example, the number of rows of the teeth and parallel chains may vary depending on the operating conditions and, as a result, the exact shape of the spacer to be disposed between the gears will vary correspondingly.

## Claims

1. A transmission gear unit for the timing system control in internal combustion engines comprising a first gear (11) and a second gear (12) disposed in one and the same plane and interconnected with each other by at least one gearing chain (13), a removable insert (14) being interposed between the gears (11, 12), which insert (14) has on one side thereof, one fitting element (19) disposed between at least two teeth of the first gear (11) and on its opposite side, at least two elements (16, 17) each fitting between two teeth of the second gear (12), the insert (14) keeping the chain (13) stretched over the gears and preventing the gears from mutually rotating.

2. A unit according to claim 1, characterized in that the insert (14) has a substantially V-shaped section wherein the "V" point forms the fitting element (19) between two teeth of the first gear (11) and the opposite free ends of the "V" limbs each form one of the fitting elements (16, 17) between the respective two teeth of the second gear (12).

3. A unit according to claim 2, characterized in that the insert (14) receives a tooth of the second gear into the central hollow (15) between the V limbs.

4. A unit according to claim 1, characterized in that the insert (14) has a grip handle (18) for removing it from the gears with a movement normal to the gear plane.

5. A unit according to claim 2, characterized in that the V-shaped element has a rounded point (19) for matching the space between the two teeth of the first gear (11).

6. A unit according to claim 2, characterized in that the V-shaped element has rounded limb ends (16, 17) for matching the spaces between the respective receiving teeth.
